# EUROPEAN PATENT SPECIFICATION

(11) **EP 3 668 936 B1**
(45) Date of publication and mention of the grant of the patent: **17.07.2024**
(21) Application number: 18762667.6
(22) Date of filing: 04.08.2018
(51) Int. Cl.: C09J 163/00, C08G 59/50, C08G 59/64

(54) **TWO-COMPONENT ROOM TEMPERATURE CURABLE TOUGHENED EPOXY ADHESIVES**
ZWEIKOMPONENTIGE, BEI RAUMTEMPERATUR HÄRTBARE, GEHÄRTETE EPOXIDKLEBSTOFFE
ADHÉSIFS ÉPOXY RÉSISTANTS DURCISSABLES À TEMPÉRATURE AMBIANTE À DEUX COMPOSANTS

(30) Priority: 15.08.2017 US 201762545628 P
(43) Date of publication of application: 24.06.2020
(73) Proprietor: DDP Specialty Electronic Materials US, LLC, Wilmington, DE19805 (US)
(72) Inventor: HAAG, Benjamin Alexander, CH-8810 Horgen (CH); LUTZ, Andreas, CH-8810 Horgen (CH); STEINER, Beda, CH-8810 Horgen (CH)
(74) Representative: Beck Greener LLP
(86) International application number: PCT/US2018/045292
(87) International publication number: WO 2019/036211

(56) References cited:
- WO-A1-2008/016889
- WO-A1-2015/153182
- WO-A2-01/00698

## Description

This invention relates to two-component toughened epoxy adhesives that can cure at room temperature.

Structural adhesives are used for metal-to-metal bonding in vehicle manufacturing operations. The metals often are coated with a lubricant, which is applied upstream in various metal manufacturing or fabrication operations. The lubricant may be applied as an anti-corrosion protection, for example. For cost reasons, vehicle manufacturers try to avoid performing a de-greasing step in which the lubricant is removed before the adhesive is applied, preferring instead to defer such a step until after the vehicle body has been at least partially assembled.

Therefore, structural adhesives used in these applications need to be able to form strong adhesive bonds even when applied to oily metal surfaces.

One-part toughened epoxy adhesives have been used successfully in these applications. These require a high-temperature cure. For that reason, the toughened epoxy adhesives are useful in manufacturing settings in which a heat-curing step can be performed soon after the adhesive is applied. In many cases, the heat-curing step is performed in a paint oven.

In some manufacturing settings it is not possible or convenient to perform the heat-curing step immediately or at all. In these cases, it is still desirable that the adhesive builds a strong adhesive bond to the substrates, despite the lack of high-temperature curing.

Toughened epoxy adhesives have not performed as well in the latter scenario, particularly when used to bond oily metal substrates. For these reason, the industry relies mainly on acrylate adhesives when ambient-temperature curing is required. The acrylate adhesives can form strong adhesive bonds to oily metal substrates even with a room-temperature cure, but these acrylate adhesives have much poorer mechanical properties than do the epoxies. It would be desirable to provide an adhesive that has mechanical properties similar to those of one-part, high temperature curable epoxy resin adhesives, but which cures at room temperature or slightly elevated temperatures to form a strong adhesive bond. It is particularly desirable that such a cured adhesive fails in mainly a cohesive failure mode.

WO 2015/153182 A1 relates to resin compositions for epoxy adhesives, comprising a di-functional aromatic epoxy compound. The resin compositions and/or uncured adhesive compositions having low viscosity at low temperatures. Adhesives made therefrom have good strength and bulk properties. WO 2015/153182 A1 includes methods of making and using its compositions, as well as adhesives made from the compositions.

This invention is a two-component epoxy adhesive comprising a resin side A and a curative side B, wherein:
a) the resin side A comprises
   A-1) a liquid epoxy resin or a liquid mixture of non-rubber-modified epoxy resins, wherein if only a single non-rubber-modified epoxy resin is present, it is a liquid at 23°C and if two or more non-rubber-modified epoxy resins are present, the mixture thereof is a liquid at 23°C;
   A-2) at least one of i) core-shell rubber particles, ii) an elastomeric toughener having capped isocyanate groups and iii) a rubber-modified epoxy resin, in an amount sufficient to provide resin side A with a total rubber content of 5 to 50%, based on the total weight of the resin side A;
   A-3) 8 to 20 weight percent, based on the total weight of the resin said A, of at least one plasticizer, wherein the plasticizer is an alkyl phthalate in which the alkyl groups each have 7 to 21 carbon atoms; and
   A-4) 5 to 40 weight percent, based on the total weight of the resin side A, of at least one particulate filler; and
b) the curative side B comprises
   B-1) at least one liquid polyether amine having at least two primary and/or secondary amino groups and a number average molecular weight of 200 to 6000;
   B-2) at least one liquid amine-terminated polymer of butadiene having an amine hydrogen equivalent weight of 200 to 3000; and
   B-3) at least one epoxy curing catalyst.

The invention is also a method for bonding two substrates, comprising combining the resin side A and the resin side B of the adhesive of the invention to form a curable adhesive mixture, forming a layer of the curable adhesive mixture at a bondline between two substrates, and then curing adhesive layer at the bondline to form a cured adhesive bonded to the two substrates at the bondline.

The adhesive of the invention cures at ambient or slightly elevated temperatures to form strong bonds to metals and other substrates. In particular, it forms strong adhesive bonds when applied to oily metals. The cured adhesive has excellent mechanical properties.

The adhesive contains at least one epoxy resin (Component A-1) that is non-rubber-modified. By "non-rubber-modified", it is meant that, prior to curing, the epoxy resin is not chemically bonded to a rubber as described below.

If only a single non-rubber-modified epoxy resin is present, it is a liquid at 23°C. If two or more non-rubber-modified epoxy resins are present, the mixture thereof is a liquid at 23°C, although individual epoxy resins within the mixture may be by themselves solids at 23°C.

A wide range of epoxy resins can be used as a non-rubber-modified epoxy resin, including those described at column 2 line 66 to column 4 line 24 of U.S. Patent 4,734 332.

The epoxy resin should have an average of at least 1.8, preferably at least 2.0, epoxide groups per molecule. The epoxy equivalent weight may be, for example, 75 to 350, preferably 140 to 250 and in some embodiments 150 to 225. If a mixture of non-rubber-modified epoxy resins is present, the mixture should have an average epoxy functionality of at least 1.8, preferably at least 2.0, and an epoxy equivalent weight as in the previous sentence, and more preferably each epoxy resin in the mixture has such an epoxy functionality and epoxy equivalent weight.

Suitable non-rubber-modified epoxy resins include diglycidyl ethers of polyhydric phenol compounds such as resorcinol, catechol, hydroquinone, biphenol, bisphenol A, bisphenol AP (1,1-bis(4-hydroxylphenyl)-1-phenyl ethane), bisphenol F, bisphenol K and tetramethylbiphenol; diglycidyl ethers of aliphatic glycols such as the diglycidyl ethers of C₂₋₂₄ alkylene glycols; polyglycidyl ethers of phenol-formaldehyde novolac resins (epoxy novolac resins), alkyl substituted phenol-formaldehyde resins, phenolhydroxybenzaldehyde resins, cresol-hydroxybenzaldehyde resins, dicyclopentadiene-phenol resins and dicyclopentadiene-substituted phenol resins; and any combination of any two or more thereof.

Suitable epoxy resins include diglycidyl ethers of bisphenol A resins such as are sold by Olin Corporation under the designations D.E.R.^{®} 330, D.E.R.^{®} 331, D.E.R.^{®} 332, D.E.R.^{®} 383, D.E.R. 661 and D.E.R.^{®} 662 resins.

Epoxy novolac resins can be used. Such resins are available commercially as D.E.N.^{®} 354, D.E.N.^{®} 431, D.E.N.^{®} 438 and D.E.N.^{®} 439 from Olin Corporation.

Other suitable non-rubber-modified epoxy resins are cycloaliphatic epoxides. A cycloaliphatic epoxide includes a saturated carbon ring having an epoxy oxygen bonded to two vicinal atoms in the carbon ring, as illustrated by the following structure III: 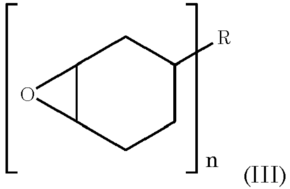 wherein R is an aliphatic, cycloaliphatic and/or aromatic group and n is a number from 1 to 10, preferably from 2 to 4. When n is 1, the cycloaliphatic epoxide is a monoepoxide. Di- or polyepoxides are formed when n is 2 or more. Mixtures of mono-, di- and/or polyepoxides can be used. Cycloaliphatic epoxy resins as described in U.S. Patent No. 3,686,359, may be used in the present invention. Cycloaliphatic epoxy resins of particular interest are (3,4-epoxycyclohexyl-methyl)-3,4-epoxy-cyclohexane carboxylate, bis-(3,4-epoxycyclohexyl) adipate, vinylcyclohexene monoxide and mixtures thereof.

Other suitable epoxy resins include oxazolidone-containing compounds as described in U. S. Patent No. 5,112,932. In addition, an advanced epoxy-isocyanate copolymer such as those sold commercially as D.E.R. 592 and D.E.R. 6508 (Olin Corporation) can be used.

Component A-1) may constitute, for example, at least 20%, at least 30% or at least 40% of the total weight of the resin side and, for example, up to 89%, up to 80%, up to 70% or up to 60% thereof.

Component A-2) is at least one of i) core-shell rubber particles, ii) an elastomeric toughener having capped isocyanate groups and iii) a rubber-modified epoxy resin. Component A-2) is present in an amount sufficient to provide resin side A with a rubber content of 5 to 50% by weight.

Suitable core-shell rubber particles have a rubbery core. The rubbery core preferably has a T_{g} of less than -20°C, more preferably less than -50°C and even more preferably less than -70°C, by differential scanning calorimetry. The T_{g} of the rubbery core may be below -100°C. The core-shell rubber also has at least one shell portion that preferably has a T_{g} of at least 50°C by differential scanning calorimetry. The core of the core-shell rubber may be a polymer or copolymer of a conjugated diene such as butadiene, or a lower alkyl acrylate such as n-butyl-, ethyl-, isobutyl- or 2-ethylhexylacrylate, or may be a silicone rubber. The shell polymer, which is optionally chemically grafted or crosslinked to the rubber core, is preferably polymerized from at least one lower alkyl methacrylate such as methyl-, ethyl- or t-butyl methacrylate. Homopolymers of such methacrylate monomers can be used. Further, up to 40% by weight of the shell polymer can be formed from other monovinylidene monomers such as styrene, vinyl acetate, vinyl chloride, methyl acrylate, ethyl acrylate, butyl acrylate, and the like. The molecular weight of the grafted shell polymer is generally between 20,000 and 500,000. Examples of useful core-shell rubbers include those described in EP 1 632 533 A1 and the disperse phase of core-shell rubber dispersions sold by Kaneka Corporation under the designation Kaneka Kane Ace, including Kaneka Kane Ace MX 156 and Kaneka Kane Ace MX 120 core-shell rubber dispersions.

Suitable elastomeric tougheners contain urethane and/or urea groups and have capped isocyanate groups. Such tougheners are well-known and can be made, for example, according to any of the methods described in U. S. Patent No. 5,202,390, U. S. Patent No. 5,278,257, WO 2005/118734, WO 2007/003650, WO2012/091842, U. S. Published Patent Application No. 2005/0070634, U. S. Published Patent Application No. 2005/0209401, U. S. Published Patent Application 2006/0276601, EP-A-0 308 664, EP 1 498 441A, EP-A 1 728 825, EP-A 1 896 517, EP-A 1 916 269, EP-A 1 916 270, EP-A 1 916 272 and EP-A-1 916 285.

A specific process for forming the toughener includes the steps of forming an isocyanate-terminated prepolymer, optionally chain-extending the prepolymer and then capping the isocyanate groups of the prepolymer or chain-extended prepolymer.

The prepolymer is formed by reacting an excess of a polyisocyanate with a 300 to 3000 equivalent weight polyol to form an isocyanate-terminated prepolymer. The prepolymer may have an isocyanate content of 0.5 to 7% by weight, 0.5 to 6% by weight, 1 to 5% by weight, 1.5 to 5% by weight or 1.5 to 4% by weight and an isocyanate equivalent weight of 600 to 8400, 700 to 8400, 700 to 4200, 840 to 4200, or 1050 to 2800. The prepolymer suitably contains, on average, at least 1.5 to 4, preferably 2 to 2.5, isocyanate groups per molecule.

The 300 to 3000 equivalent weight polyol may be, for example, a polyether polyol, a hydroxyl-terminated butadiene homopolymer or copolymer, a hydroxyl-terminated polysiloxane, or other hydroxyl-terminated material that preferably has a glass transition temperature of 0°C or lower, preferably -20°C or lower. If a polyether polyol, it may be a polymer of one or more of tetrahydrofuran (tetramethylene oxide), 1,2-butylene oxide, 2,3-butylene oxide, 1,2-propylene oxide and ethylene oxide, with polymers or copolymers of at least 50% of tetrahydrofuran, 1,2-butylene oxide, 2,3-butylene oxide and 1,2-propylene oxide being preferred. The polyol preferably has 2 to 3, more preferably 2, hydroxyl groups per molecule.

A branched prepolymer can be formed by incorporating a branching agent into its structure, during or after the prepolymer-forming step. The branching agent, for purposes of this invention, is a polyol or polyamine compound having a molecular weight of up to 599, preferably 50 to 500, and at least three hydroxyl, primary amino and/or secondary amino groups per molecule. If used at all, branching agents generally constitute no more than 10%, preferably no more than 5% and still more preferably no more than 2% of the combined weight of the branching agent and 300 to 3000 equivalent weight polyol. Examples of branching agents include polyols such as trimethylolpropane, glycerin, trimethylolethane, ethylene glycol, diethylene glycol, propylene glycol, dipropylene glycol, sucrose, sorbitol, pentaerythritol, triethanolamine, diethanolamine and the like, as well as alkoxylates thereof having a molecular weight of up to 599, especially up to 500.

The polyisocyanate may be an aromatic polyisocyanate, but it is preferably an aliphatic polyisocyanate such as isophorone diisocyanate, 1,6-hexamethylene diisocyanate, hydrogenated toluene diisocyanate, hydrogenated methylene diphenylisocyanate (H₁₂MDI), and the like.

The prepolymer may be reacted with a chain extender to produce a chain extended, isocyanate-terminated prepolymer. Chain extenders include polyol or polyamine compounds having a molecular weight of up to 749, preferably 50 to 500, and two hydroxyl, primary amino and/or secondary amino groups per molecule. Examples of suitable chain extenders include aliphatic diols such as ethylene glycol, diethylene glycol, triethylene glycol, propylene glycol, dipropylene glycol, tripropylene glycol, 1,4-butanediol, 1,6-hexane diol, cyclohexanedimethanol and the like; aliphatic or aromatic diamines such as ethylene diamine, piperazine, aminoethylpiperazine, phenylene diamine, diethyl toluene diamine and the like, and compounds having two phenolic hydroxyl groups such resorcinol, catechol, hydroquinone, bisphenol, bisphenol A, bisphenol AP (1,1-bis(4-hydroxylphenyl)-1-phenyl ethane), bisphenol F, bisphenol K, bisphenol M, tetramethylbiphenol and o,o'-diallyl-bisphenol A, and the like.

The isocyanate groups of the prepolymer are capped by reaction with a capping group. Various types of capping groups are suitable including those described in US Patent No. 5,202,390, US Patent No. 5,278,257, US Patent No. 7,615,595, US Published Patent Application Nos. 2005-0070634, 2005-0209401, 2006-0276601 and 2010-0019539, WO 2006/128722, WO 2005/118734 and WO 2005/0070634.

Among the useful capping agents are:
a) Aliphatic, aromatic, cycloaliphatic, araliphatic and/or heteroaromatic monoamines that have one primary or secondary amino group
b) Phenolic compounds, including monophenols, polyphenols and aminophenols. Examples of such phenolic capping compounds include phenol, alkyl phenols that contain one or more alkyl groups that each may contain from 1 to 30 carbon atoms, naphthol or a halogenated phenol. Suitable polyphenols contain two or more, preferably two, phenolic hydroxyl groups per molecule and include resorcinol, catechol, hydroquinone, bisphenol, bisphenol A, bisphenol AP (1,1-bis(4-hydroxylphenyl)-1-phenyl ethane), bisphenol F, bisphenol K, bisphenol M, tetramethylbiphenol and o,o'-diallyl-bisphenol A, as well as halogenated derivatives thereof. Suitable aminophenols are compounds that contain at least one primary or secondary amino group and at least one phenolic hydroxyl group. The amino group is preferably bound to a carbon atom of an aromatic ring. Examples of suitable aminophenols include 2-aminophenol, 4-aminophenol, various aminonaphthols, and the like.
c) Benzyl alcohol, which may be substituted with one or more alkyl groups on the aromatic ring;
d) Hydroxy-functional acrylate or methacrylate compounds such as 2-hydroxyethylacrylate, 2-hydroxypropylacrylate, 4-hydroxybutylacrylate, 2-hydroxybutylacrylate, 2-aminopropylacrylate, 2-hydroxyethylmethacrylate, 2-hydroxypropylmethacrylate, 4-hydroxybutylmethacrylate and 2-hydroxybutylmethacrylate;
e) thiol compounds such as alkylthiols having 2 to 30, preferably 6 to 16, carbon atoms in the alkyl group, including dodecanethiol;
f) alkyl amide compounds having at least one amine hydrogen such as acetamide and N-alkylacetamide; and
g) a ketoxime.

At least 90%, preferably at least 95%, more preferably at least 98%, and up to 100% of the isocyanate groups of the prepolymer are capped with capping agents of one or more of these types.

The elastomeric toughener suitably has a number average molecular weight from at least 3000, preferably at least 4,000, to about 35,000, preferably to about 20,000 and more preferably to about 15,000 g/mol, measured by GPC, taking into account only those peaks that represent molecular weights of 1000 or more. It may have a polydispersity (ratio of weight average molecular weight to number average molecular weight) of 1 to about 4, preferably from about 1.5 to 3. An especially preferred elastomeric toughener contains an average of from 1.9 to 3 capped isocyanate groups per molecule.

The rubber-modified epoxy resin is a reaction product of a liquid rubber that has epoxy-reactive groups with an excess of an epoxy resin such as described before. This reaction produces a rubber that has terminal epoxide groups.

The liquid rubber has a glass transition temperature (T_{g}) of -40°C or lower, especially -50°C or lower, as measured by differential scanning calorimetry. Such a liquid rubber may be a homopolymer or copolymer of a conjugated diene, especially a diene/nitrile copolymer. The conjugated diene is preferably butadiene or isoprene, with butadiene being especially preferred. The preferred nitrile comonomer is acrylonitrile. Preferred copolymers are butadiene-acrylonitrile copolymers.

The liquid rubber preferably contains from about 1.5, more preferably from about 1.8, to about 3.5, more preferably to about 3, epoxide-reactive terminal groups per molecule, on average. Carboxyl-terminated rubbers are preferred. The molecular weight (Mₙ) of the rubber is suitably from about 2000 to about 6000, more preferably from about 3000 to about 5000. Suitable carboxyl- and/or amine-terminated butadiene and butadiene/acrylonitrile rubbers are commercially available from Noveon under the tradenames Hypro^{®} 2000X162 carboxyl-terminated butadiene homopolymer, Hypro^{®} 1300X31, Hypro^{®} 1300X8, Hypro^{®} 1300X13, Hypro^{®} 1300X16, Hypro^{®} 1300X9 and Hypro^{®} 1300X18 and Hypro^{®} 1300X21 rubbers.

The amount of component A-2) is sufficient to provide the resin side A with a total rubber content of 5 to 50%. The total rubber content of resin side A may be at least 10% and may be up to 40%, up to 30%, up to 25% or up to 22%. Total rubber content is calculated by adding i) the weight of core-shell rubber particles, if any, ii) the weight of the elastomeric toughener and iii) the weight of the rubber portion of the rubber-modified epoxy resin, and dividing the resulting sum by the total weight of the resin side A.

In cases in which the core-shell rubber is supplied in the form of a dispersion, only the weight of the core-shell rubber particles, and not the weight of the liquid phase, is counted toward total rubber content. If the liquid phase is an epoxy resin, the weight of the liquid phase is counted toward the amount of non-rubber-modified component A-1).

The weight of the rubber portion of the rubber-modified epoxy resin is equal to the weight of the liquid rubber used to manufacture the rubber-modified epoxy resin.

The core-shell rubber particles may be present, for example, in an amount of 3 to 15 weight percent, based on the weight of resin side A.

The elastomeric toughener may be present, for example, in an amount of 5 to 25 weight percent or 5 to 15 weight percent, based on the weight of resin side A.

The rubber-modified epoxy resin may be present, for example (if present at all) in an amount of 0.25 to 15 weight percent or 3 to 12 weight percent, based on the weight of resin side A.

In some embodiments, both core-shell rubber particles and the elastomeric toughener are present in amounts as indicated above. In other embodiments, the core-shell rubber particles and rubber-modified epoxy resin are both present, in amounts as indicated above. In yet other embodiments, the core-shell rubber particles, elastomeric toughener and rubber-modified epoxy resin are all present, again in amounts as indicated above.

The plasticizer (component A-3), for purposes of this invention, is a material that a) is a room temperature liquid in which component A-1) is soluble, b) has a molecular weight of at least 100 g/mol, preferably at least 125 g/mol, c) has a boiling temperature of at least 100°C and preferably at least 150°C and d) lacks epoxide groups or epoxide-reactive groups. The plasticizeris an alkyl phthalate in which the alkyl groups each have 7 to 21 carbon atoms, especially 7 to 13 carbon atoms. Examples of these are diisononylphthalate, diisooctylphthalate, diisodecylphthalate, and C₇₋₁₃ mixed alkyl phthalate esters. Other preferred plasticizers include alkyl benzyl phthalates, wherein the alkyl group is as described with regard to the alkyl phthalates.

The plasticizer (component A-3) constitutes 8 to 20 percent of the total weight of resin side A. It may constitute up to 16 or up to 12 weight percent thereof.

The particulate filler (component A-4) is one or more materials that are solids at the temperatures reached in the curing reaction (and preferably at 200°C or greater) and do not degrade or decompose at such temperatures. Examples of suitable mineral fillers include calcium carbonate, calcium oxide, phyllosilicates such as chlorites, talc, carbon black, textile fibers, glass particles or fibers, aramid pulp, boron fibers, carbon fibers, mineral silicates, mica, powdered quartz, hydrated aluminum oxide, bentonite, wollastonite, kaolin, fumed silica, silica aerogel, polyurea compounds, polyamide compounds, metal powders such as aluminum powder or iron powder and expandable microballoons. A mixture of fillers that includes at least fumed silica and which may further include one or more of calcium carbonate, a phyllosilicate such as a chlorite, talc and wollastonite, can be used. A filler mixture that includes fumed silica, a chlorite, talc and wollastonite may be present in the resin side A. Particulate fillers may constitute at least 5, at least 10 or at least 12% of the total weight of resin side A, and may constitute up to 40%, up to 30%, up to 25% thereof. When the mineral fillers include fumed silica, the resin side A may contain up to 12% by weight, preferably 4 to 10% by weight of fumed silica.

The filler particles may be in the form of low aspect ratio particles having an aspect ratio of 5 or less, especially 2 or less, and a longest dimension of up to 100 µm, preferably up to 25 µm, and or in the form of fibers having a diameter of 1 to 50 µm (D50, as measured by microscopy) and an aspect ratio of 6 to 20. The diameter of the fibers may be 2 to 20 µm or 2 to 10 µm, and the aspect ratio may be 8 to 20 or 8 to 16. The diameter of the fiber is taken as that of a circle having the same cross-sectional area as the fiber. The aspect ratio of the fibers may be 6 or more, such as 6 to 25, 6 to 20, 8 to 20 or 8 to 15.

The resin side A may further include one or more monomeric or oligomeric, addition polymerizable, ethylenically unsaturated materials. This material should have a molecular weight of less than about 1500. This material may be, for example, an acrylate or methacrylate compound, an unsaturated polyester, a vinyl ester resin, or an epoxy adduct of an unsaturated polyester resin. A free radical initiator can be included in the adhesive composition as well in order to provide a source of free radicals to polymerize this material. The inclusion of an ethylenically unsaturated material of this type provides the possibility of effecting a partial cure of the adhesive through selective polymerization of the ethylenic unsaturation. Such an ethylenically unsaturated material, if present, may constitute up to 20%, up to 10% or up to 5% of the weight of resin side A.

The resin side A can further contain other additives such as dimerized fatty acids, reactive diluents, pigments and dyes, fire-retarding agents, thixotropic agents, expanding agents, flow control agents, adhesion promoters and antioxidants. Suitable expanding agents include both physical and chemical type agents. The adhesive may also contain a thermoplastic powder such as polyvinylbutyral or a polyester polyol, as described in WO 2005/118734.

The curative side B includes at least one liquid polyetheramine having at least two primary and/or secondary amino groups and a number average molecular weight of 200 to 6000 (component B-1). "Liquid" here and elsewhere in this specification, unless specified otherwise, refers to the aggregative state of the mentioned material at 22°C. The polyetheramine may have a molecular weight of 200 to 5000, 200 to 2200 or 200 to 600. The polyetheramine may be a polymer of 1,2-propylene oxide and/or ethylene oxide. The polyetheramine contains terminal primary or secondary amino groups. It may contain, for example 2 to 4 primary and/or secondary amino groups per molecule. A mixture of a difunctional polyetheramine having 2 primary and/or secondary amino groups and a trifunctional polyetheramine having 3 primary and/or secondary amino groups can be present. Examples of suitable polyether amines include 4,7,10-trioxa-1,13-tridecanediamine and aminated polyether products sold as Jeffamine^{®} D-400, Jeffamine^{®} T-403, Jeffamine^{®} D-2000 and Jeffamine^{®} T-5000 by Huntsman Corporation.

The polyetheramine(s) may constitute, for example, 15 to 60%, 20 to 50% or 25 to 40% of the total weight of the curative side B.

The curative side B further contains (B-2) at least one liquid amine-terminated polymer of butadiene having an amine hydrogen equivalent weight of 200 to 3000 or 500 to 1500. This polymer may be a butadiene homopolymer or a copolymer of butadiene with another monomer such as styrene or acrylonitrile. Suitable amine-terminated butadiene polymers include Hypro^{®} 1300X16, Hypro^{®} 1300X21, Hypro^{®} 1300X35, Hypro^{®} 1300X42 and Hypro^{®} 1330X45 rubbers, all from Emerald Materials.

The amine-terminated butadiene polymer may constitute at least 5, at least 10, at least 15 or at least 20 percent of the total weight of the curative side B. It may constitute up to 50, up to 40 or up to 35 percent thereof.

The resin side B further includes B-3) at least one epoxy curing catalyst. It is preferred that at least one catalyst is not a latent type, *i.e*., does not encapsulated or otherwise require heat activation. Examples of suitable catalysts include Lewis acids such as boron trifluoride, boron trifluoride/piperidine complexes, boron trifluoride/methyl ethyl amine complexes, stannic chloride, zinc chloride and the like; metal carboxylate salts such as stannous octoate; various imidazole compounds, and various tertiary amine compounds.

Among the useful tertiary amine catalysts are those described in US 5,385,990. Those include triethylamine, benzyl dimethylamine, dimethylaminomethylphenol, methyldiethanolamine, triethanolamine, diethylaminopropylamine, m-xylylenedi(dimethylamine), N,N'-dimethylpiperazine, N-methylpyrolidine, N-methyl hydroxypiperidine, N,N,N'N'-tetramethyldiaminoethane, N,N,N',N',N'-pentamethyldiethylenetriamine, tributyl amine, trimethyl amine, diethyldecyl amine, triethylene diamine, N-methyl morpholine, N,N,N'N'-tetramethyl propane diamine, N-methyl piperidine, N,N'-dimethyl-1,3-(4-piperidino)propane, pyridine, 1,8-diazobicyclo[5.4.0]-7-ene, 1,8-diazabicyclo[2.2.2]octane, 4-dimethylaminopyridine, 4-(N-pyrolidino)pyridine, triethyl amine and 2,4,6-tris(dimethylaminomethyl)phenol.

The catalyst(s) may constitute, for example, at least 0.25, at least 0.5, at least 1, at least 2, at least 5 or at least 7.5% of the total weight of curative side B, and may constitute, for example, up to 20%, up to 15% or up to 12% thereof.

The curative side B preferably further contains B-4) at least one polyethylene imine. The polyethyleneimine may have a molecular weight, for example, of 1000 to over 1 million. Such a polyethyleneimine may constitute, for example, at least 0.25, at least 0.5, at least 1, at least 2 or at least 3% of the total weight of the curative side B, and may constitute up to 25%, up to 15%, up to 10% or up to 6% thereof.

The curative side B may contain B-5) a latent (heat-activated) curing agent such as a dicyandiamide, melamine, diallylmelamine, methyl guanidine, dimethyl guanidine, trimethyl guanidine, tetramethyl guanidine, methylisobiguanidine, dimethylisobiguanidine, tetramethylisobiguandidine, heptamethylisobiguanidine, hexamethylisobiguanidine, acetoguanamine and benzoguanamine, Such a latent curing agent, if present at all, may constitute, for example 0.1 to 10%, preferably 1 to 7.5% or (if present) 2 to 5% of the total weight of the curative side B.

The curative side B may contain one or more particulate fillers as described above with regard to the resin side A. Such particulate fillers may constitute, for example, at least 1, at least 2 or at least 5% of the total weight of the curative side B, and may constitute, for example, up to 30%, up to 25%, up to 20% or up to 15% thereof.

The curative side B may contain an acryl-modified silane compound. Such compounds may have the structure 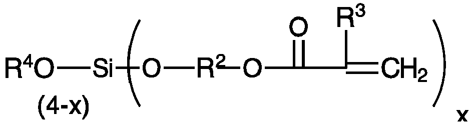 wherein R⁴ is alkyl, preferably methyl or ethyl; each R² is independently alkylene, preferably ethylene or isopropylene; R³ is hydrogen or alkyl, preferably hydrogen or methyl and x is 1 or 2, preferably 1. 2-methacryloyloxyethyl-trimethoxysilane is a suitable acryl-modified silane compound. If present, the acryl-modified silane compound may constitute at least 0.1, at least 0.5, at least 1 or at least 2 percent of the total weight of the curative side B, and may constitute up to 10, up to 8, up to 6 or up to 4% thereof.

The curative side B may contain an acryl-modified phosphate compound. Such a compound may have the structure: 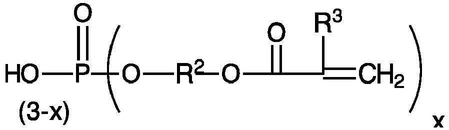 wherein R², R³ and x are as before. Bis (2-methacryloyloxyethyl) phosphate and 2-methacryloyloxyethyl phosphate are suitable acryl-modified phosphate compounds. If present, the acryl-modified phosphate compound may constitute at least 0.1, at least 0.5, at least 1 or at least 2 percent of the total weight of the curative side B, and may constitute up to 10, up to 8, up to 6 or up to 4% thereof.

The curative side B may further contain optional ingredients such as one or more additional epoxy curing agents, fillers as described above, and/or other optional ingredients described with regard to the resin side B.

The adhesive is a two-part, ambient cure adhesive. The resin side A and curative side B are packaged separately. To form the adhesive and bond substrates therewith, the resin side A and curative side B are mixed, applied to a bondline between two substrates, and allowed to cure at the bondline to form an adhesive bond between the substrates.

The resin side A and curative side B are conveniently mixed at ratios to provide, for example, at least 0.5, at least 0.75, at least 0.8, at least 0.9 or at least 0.95 equivalents of amine hydrogens per equivalent of epoxy groups, and, for example, up to 5 up to 2, up to 1.5, up to 1.25 or up to 1.1 equivalents of amine hydrogens per equivalent of epoxy groups.

The adhesive can be applied to the substrates by any convenient technique. It can be applied cold or be applied warm if desired. It can be applied manually and/or robotically, using for example, a caulking gun, other extrusion apparatus, or jet spraying methods. Once the adhesive composition is applied to the surface of at least one of the substrates, the substrates are contacted such that the adhesive is located at a bondline between the substrates.

Curing occurs spontaneously upon mixing the resin side A and curative side B at temperatures of 10°C or greater. The curing temperature may be, for example, at least 15°C or at least 20°C, and may be up to 250°C, up to 210°C or up to 180°C. A preferred upper temperature is 50°C, 40°C or 30°C. An advantage of the invention is that such low curing temperatures can be employed, while still enjoying the benefits of good adhesion, desirable failure mode and good mechanical properties.

The adhesive of the invention can be used to bond a variety of substrates together including wood, metal, a variety of plastic and filled plastic substrates, fiberglass and the like. The substrates can be different materials. Examples of substrate pairings include pairings of different metals such as steel and aluminum; steel and magnesium; and aluminum and magnesium; pairings of a metal such as steel, magnesium, aluminum or titanium with a polymeric material such as thermoplastic organic polymer or a thermoset organic polymer; and pairing of a metal such as steel aluminum, magnesium or titanium and a fiber composite such as a carbon-fiber composite or a glass fiber composite.

In one preferred embodiment, the adhesive is used in metal-to-metal bonding, to bond parts of automobiles together. An application of particular interest is bonding of automotive or other vehicular frame components to each other or to other components. Such metal parts can be fabricated of, for example, steel, coated steel, electrogalvanized steel, hot-dipped galvanized steel, aluminum, coated aluminum or magnesium.

The invention has particular benefits when one or both of substrates is an oily metal. By "oily metal", it is meant the metal is coated with an oil, *i.e*., an electrostatically neutral, hydrophobic material that has a melting temperature of 40°C or lower and a viscosity of at least 5 centistokes (5 mm²/s) at 40°C as measured by ASTM D445. The viscosity may be, for example, at least 8 centistokes, at least 20 centistokes or at least 50 centistokes to as much as 500 centistokes, as much as 250 centistokes or as much as 125 centistokes at that temperature. By "hydrophobic", it is meant the material is soluble in water to the extent of no more than 2 parts (in some embodiments no more than 0.25 part) by weight per 100 parts by weight water at 23°C. The oil may include, for example, a petroleum product, a plant or animal oil or fat, and/or a synthetic oil such as various types of synthetic ester lubricants. Examples of oily materials include for example, lubricating oils such as sewing machine oils, stamping oils, motor oils, soldering pastes, gear lubricants, die lubricants, trim press lubricants, and aviation oils, axle and transmission oils, compressor oils, electrical oils, gear oils, hydraulic fluids, process oils, slideway oils and turbine oils. Such oils include those sold, for example, by Fuchs Lubricants UK PLC, International Chemical Company, Philadelphia, PA, USA, Chemtool Inc., Rockland, IL, USA, and Lamson Oil Co., Rockland, IL, USA, among many others. Specific examples include Anticorit^{™} PL3802-3S from Fuchs Lubricants UK and Oest Platinol^{®} B894/3 COW-1. The oil may contain various types of contaminants. The amount of oil on the surface of the substrate to which the adhesive is applied may be, for example 0.1 to 10 grams per square meter of substrate (g/m²), 0.25 to 5 g/m², or 0.5 to 2.5 g/m².

Between the steps of applying the adhesive and applying the coating, the assembly may be fastened together to maintain the substrates and adhesive in a fixed position relative to each other until the curing step is performed. Mechanical means can be used as a fastening device. These include, for example, temporary mechanical means such as various types of clamps, bands and the like, which can be removed once the curing step is completed. The mechanical fastening means can be permanent or semi-permanent, such as, for example, various types of welds, rivets, screws, and/or crimping methods. Alternatively or in addition, the fastening can be done by spot-curing one or more specific portions of the adhesive composition to form one or more localized adhesive bonds between the substrates while leaving the remainder of the adhesive uncured until a final curing step is performed after the coating is applied.

The cured adhesive in some embodiments exhibits a lap shear strength (per DIN EN 1465), measured on galvanized steel substrates coated with an anticorrosion lubricant as described in the following examples, of at least 10 MPa, at least 12 MPa or at least 14 MPa, after curing for 1 day at room temperature (23°C) followed by 30 minutes at 180°C. The failure mode of samples made and tested under these conditions is preferably at least 40% cohesive failure mode. The failure mode may be at least 50% cohesive failure or at least 80% cohesive failure. The failure mode may be 100% cohesive failure.

The adhesive, when cured for 7 days at 23°C, may exhibit, for example, an elongation of 4 to 25%, a tensile strength of at least 10 MPa or at least 15 MPa, and/or an elastic modulus of at least 400 MPa, at least 1000 MPa or at least 1250 MPa, when measured according to DIN EN ISO 527-1.

The adhesive may exhibit an impact peel resistance, measured at 23°C on galvanized steel substrates coated with an anticorrosion lubricant as described in the following examples, of at least 5 N/mm or at least 7 N/mm, after curing for 7 days at room temperature (23°C).

The following examples are provided to illustrate the invention but are not intended to limit the scope thereof. All parts and percentages are by weight unless otherwise indicated. All molecular weights are number averages unless otherwise indicated.

In the following examples:
The Epoxy Resin is a diglycidyl ether of bisphenol A having an epoxy equivalent weight of about 186.

The CSR (core-shell rubber) is a dispersion of 25% by weight core-shell rubber particles in 75% by weight of a diglycidyl ether of bisphenol A.

The Toughener is a 2000 molecular weight tetrahydrofuran that is reacted with a diisocyanate to form an isocyanate-terminated prepolymer, followed by capping the isocyanate groups with bisphenol A.

The RME (rubber-modified epoxy resin) is a reaction product of a carboxyl-terminated butadiene/acrylonitrile copolymer and the Epoxy Resin, at a weight ratio of about 30:1.

Plasticizer A is a commercially available diisononylphthalate product.

Plasticizer B is a commercially available C₇₋₉ alkyl benzyl phthalate.

Plasticizer C is a commercially available C₈₋₁₀ dialkyl phthalate.

Plasticizer D is a commercially available C₁₀₋₂₁ alkyl sulfonic acid phenyl ester.

Plasticizer E is a commercially available diisononyl ester of 1,2-cyclohexanedicarboxylic acid.

Filler A is a mixture of chlorite, wollastonite, talc and fumed silica, except when noted otherwise.

Filler B is a mixture of talc and fumed silica.

The Adhesion Promoter is a commercially available silane.

The Polyethyleneimine is a commercially available material having a molecular weight of about 750,000, as reported by its manufacturer.

Polyetheramine A is a branched amine-terminated polypropylene oxide having about 3 primary amino groups per molecule and a molecular weight of about 440.

Polyetheramine B is a linear 2000 molecular weight, primary amine-terminated polypropylene oxide).

Polyetheramine C is 4,7, 10-trioxa- 1, 13-tridecanediamine.

The Accelerator is 2,4,6-tris(dimethylaminomethyl)phenol.

The ATBN is a commercially available amine-terminated butadiene-acrylonitrile copolymer having an amine hydrogen equivalent weight of 900-1200.

### Examples 1-7 and Comparative Sample A

Resin side compositions 1 through 8 are prepared by blending the ingredients listed in Table 1:

**Table 1**

| **Ingredient** | **Parts by Weight** | | | | | | | |
|---|---|---|---|---|---|---|---|---|
| | A* | 1 | 2 | 3 | 4 | 5 | 6 | 7 |
| Epoxy Resin | 34.5 | 31.5 | 29.5 | 27.5 | 25.5 | 23.5 | 29.5 | 28.5 |
| CSR | 34.0 | 31.0 | 29.0 | 27.0 | 25.0 | 23.0 | 29.0 | 28.0 |
| Toughener | 8.0 | 8.0 | 8.0 | 8.0 | 8.0 | 8.0 | 8.0 | 8.0 |
| Plasticizer A | 0 | 4 | 8 | 12 | 16 | 20 | 12 | 12 |
| Filler A | 21.0 | 23.0 | 23.0 | 23.0 | 23.0 | 23.0 | 19.0 | 21.0 |
| Colorant | 0.5 | 0.5 | 0.5 | 0.5 | 0.5 | 0.5 | 0.5 | 0.5 |
| Adhesion Promoter | 3.0 | 2.0 | 2.0 | 2.0 | 2.0 | 2.0 | 2.0 | 2.0 |
| Rubber Content | 16.5% | 15.75% | 15.25% | 14.75% | 14.25% | 13.75% | 15.25% | 15.0% |

| | | | | | | | | |
|---|---|---|---|---|---|---|---|---|
| *Not an example of the invention. | | | | | | | | |

Curative side B-1 is prepared separately by blending the ingredients listed in Table 2:

**Table 2**

| **Ingredient** | **Parts by Weight** |
|---|---|
| Polyethyleneimine | 4.0 |
| Polyetheramine A | 24.5 |
| Polyetheramine C | 9.0 |
| Accelerator | 12.0 |
| ATBN | 36.2 |
| Filler B | 10.0 |
| Dicyandiamide | 4.0 |
| Adhesion Promoter | 0.3 |

Comparative Sample A and Adhesive Examples 1-7 are made by mixing Curative side B-1 with Resin sides C and A-1 through A-7, respectively. In each case the Curative and Resin side are mixed at a 1:2 weight ratio and then formed into an adhesive layer between two test coupons for lap shear strength measurement according to DIN EN 1465. One of the test coupons is Thyssen-Krupp DC04+ZE 75/57 electrogalvanized steel and the other is Thyssen-Krupp DX56D+Z100 hot-dipped galvanized steel. The coupons are degreased and then regreased with Anticorit PL 3802-39S anticorrosion lubricant prior to applying the adhesive. The adhesive layer thickness is 0.2-0.3 mm. The applied adhesive is cured under air for 7 days at 23°C. Lap shear testing is performed at 23°C. Results are as indicated in Table 3.

**Table 3**

| **Designation** | **Lap Shear strength, MPa** | **% Cohesive Failure** |
|---|---|---|
| A* | 7.7 | 0 |
| 1 | 11.9 | 0 |
| 2 | 13.2 | 20 |
| 3 | 14.3 | 100 |
| 4 | 13.5 | 100 |
| 5 | 12.8 | 100 |
| 6 | 12.9 | 20 |
| 7 | 13.5 | 50 |

| | | |
|---|---|---|
| *Not an example of this invention. | | |

Examples 1 through 5 show the effect of replacing a portion of the epoxy resin and core-shell rubber particles with the plasticizer. Lap shear strength increases dramatically. Failure mode changes from 100% adhesive failure to 100% cohesive failure with the inclusion of 12-20% plasticizer by weight of the resin side A.

In Examples 6 and 7, the amount of epoxy resin and core shell rubber particles is higher than in Example 3, which contains the same amount of plasticizer. The amount of filler is also higher than in Examples 1-5. Lap shear strength remains high, although there is more adhesive failure.

Example 3 and Comparative Sample A are taken for lap shear testing on several different oily and degreased substrates, in some cases using an accelerated curing protocol in which the samples are cured for 1 day at 23°C followed by 30 minutes at 180°C. The substrates and applied oils are as reported in Table 4, together with lap shear testing results.

**Table 4**

| **Substrate** | **Lubricant** | **Curing Protocol** | **Adhesive** | **Lap Shear Strength, MPa** | **% Cohesive Failure** |
|---|---|---|---|---|---|
| DC05B+ZE 75/75 EG steel | None (Degreased) | 7 day RT | A* | 23.9 | 80 |
| | | | Ex. 3 | 20.5 | 100 |
| | Palatinol B804/3 COW1 | 7 day RT | A | 6.5 | 0 |
| | | | Ex. 3 | 14.1 | 100 |
| DX56D+Z100MB EG steel | Anticorit 3802-39S | 7 day RT | A | 9.9 | 0 |
| | | | Ex. 3 | 12.6 | 30 |
| | Quaker Ferrocat N6130 | Accelerated | A | N.D. | 0 |
| | | | Ex. 3 | 13.0 | 100 |
| | Anticorit RP 41705S | Accelerated | A | N.D. | 100 |
| | | | Ex. 3 | 13.0 | 100 |
| DX56D+Z100MB/ DC05B+ZE 75/75 | Palatinol B804/3 COW1 | 7 day RT | A | 13.9 | 30 |
| | | | Ex. 3 | 14.5 | 100 |
| | Anticorit 3802-39S | 7 day RT | A | 7.7 | 0 |
| | | | Ex. 3 | 12.6 | 80 |
| DX56D+Z100/ DC04A+ZE 75/75P | Anticorit 3802-39S | 7 day RT | A | 4 | 0 |
| | | | Ex. 3 | 14.3 | 100 |
| AC 120 Aluminum | None (Degreased) | 7 day RT | A | 15.9 | 100 |
| | | | Ex. 3 | 14.5 | 100 |
| | Quaker Ferrocat N6130 | Accelerated | A | N.D. | 0 |
| | | | Ex. 3 | 12.0 | 100 |
| | Anticorit RP 41705S | Accelerated | A | N.D. | 0 |
| | | | Ex. 3 | 12.0 | 100 |

| | | | | | |
|---|---|---|---|---|---|
| *Not an example of the invention. | | | | | |

As can be seen in the data in Table 4, the comparative adhesive bonds well to degreased surfaces but not oily ones. Example 3 bonds well to a variety of metals having a variety of applied oils. Lap shear strength is uniformly increased relative to Comparative Adhesive A, as is the incidence of the desired cohesive failure. Good results are seen with ambient and accelerated cure.

### Examples 8-10

Examples 8-10 are made and tested in the same general manner described in the previous examples, using the same substrates and curing conditions as indicated with regard to Examples 1-7. The curative side is Curative Side B-1 as described in the previous examples. Examples 8-10 are made using Resin Sides 8-10, respectively, which have the same composition as Resin Side 3 above, except the plasticizer is replaced with an equal weight of a different plasticizer as follows:
Resin Side 8: Plasticizer C
Resin Side 9: Plasticizer D
Resin Side 10: Plasticizer E

Results of lap shear testing are as indicated in Table 5. The results of Comparative Sample A are repeated for comparison.

**Table 5**

| **Designation** | **Lap Shear strength, MPa** | **% Cohesive Failure** |
|---|---|---|
| A* | 7.7 | 0 |
| 8 | 12.6 | 20 |
| 9* | 13.1 | 30 |
| 10* | 13.0 | 10 |

| | | |
|---|---|---|
| *Not an example of the invention. | | |

The presence of Plasticizers C, D and E all result in a very large increase in lap shear strength. They increase the incidence of cohesive failure mode, but not as effectively as does Plasticizer A at the same loading.

### Examples 11-13

Examples 11-13 are made and tested in the same general manner described in the previous examples, using the same substrates and curing conditions as indicated with regard to Examples 1-7. The curative side is Curative Side B-1 as described in the previous examples. The resin sides are made by mixing the ingredients indicated in Table 6. Lap shear strength and % cohesive failure are as indicated in Table 6.

**Table 6**

| **Resin side Ingredient** | **Parts by Weight** | | |
|---|---|---|---|
| | 11 | 12 | 13 |
| Epoxy Resin | 30.5 | 31.5 | 27.5 |
| CSR | 30.0 | 31.0 | 27.0 |
| Toughener | 8.0 | 0 | 8.0 |
| Plasticizer B | 6.0 | 12.0 | 12.0 |
| Filler A | 22.0 | 23.0 | 23.0 |
| Colorant | 0.5 | 0.5 | 0.5 |
| Adhesion Promoter | 3.0 | 2.0 | 2.0 |
| Rubber Content | 15.5% | 7.75% | 14.75% |
| Lap Shear Strength, MPa | 13.2 | 14.5 | 11.2 |
| % Cohesive Failure | 60 | 50 | 0 |

In these formulations, the presence of Plasticizer B greatly improves lap shear strength. In Examples 11 and 12, it increases the incidence of the desired cohesive failure mode as well.

### Examples 14-20

Examples 14-20 are made from resin side compositions as set forth in Table 7 and curative side compositions as set forth in Table 8.

**Table 7-Resin Side Compositions**

| **Ingredient** | **Parts by Weight** | | | | |
|---|---|---|---|---|---|
| | **Ex. 14** | **Ex. 15-17** | **Ex. 18** | **Ex. 19** | **Ex. 20** |
| Epoxy Resin | 27.5 | 24.5 | 25.5 | 25.5 | 22.5 |
| CSR | 27.0 | 24.0 | 25.0 | 25.0 | 22.0 |
| Toughener | 8.0 | 8.0 | 0 | 0 | 4.0 |
| Plasticizer A | 12.0 | 12.0 | 12.0 | 10.0 | 10.0 |
| Filler A¹ | 23.0 | 29.0 | 35.0 | 37.0 | 39.0 |
| Colorant | 0.5 | 0.5 | 0.5 | 0.5 | 0.5 |
| Adhesion Promoter | 2.0 | 2.0 | 2.0 | 2.0 | 2.0 |
| Rubber Content | 14.75% | 14.0% | 6.25% | 6.25% | 9.5% |

| | | | | | |
|---|---|---|---|---|---|
| ¹No fumed silica in Example 19. | | | | | |

**Table 8-Curative Side Compositions**

| **Ingredient** | **Parts by Weight** | | | | |
|---|---|---|---|---|---|
| | Ex. 14, 15, 18 | Ex. 16 | Ex. 17 | Ex. 19 | Ex. 20 |
| Polyethyleneimine | 4.0 | 4.0 | 4.0 | 4.0 | 4.0 |
| Polyetheramine A | 24.5 | 0 | 12.5 | 24.5 | 24.5 |
| Polyetheramine B | 0 | 24.50 | 12.5 | 0 | 0 |
| Polyetheramine C | 9.0 | 9.0 | 9.0 | 9.0 | 9.0 |
| Accelerator | 12.0 | 12.0 | 12.0 | 12.0 | 12.0 |
| ATBN | 33.2 | 33.2 | 33.2 | 33.2 | 33.2 |
| Filler B | 10.0 | 10.0 | 10 | 10 | 10 |
| Dicyandiamide | 4.0 | 4.0 | 4.0 | 4.0 | 4.0 |
| Adhesion Promoter | 0.3 | 0.3 | 0.3 | 0.3 | 0.3 |
| Bis(2-methacryloyloxyethyl) phosphate | 3.0 | 0 | 0 | 0 | 0 |
| 2-methacryloyloxyethyl-trimethoxysilane | 0 | 3.0 | 3.0 | 3.0 | 0 |
| 1-meethacryloyloxy-ethyl phosphate | 0 | 0 | 0 | 0 | 3.0 |

Lap shear testing is performed as described in the previous examples, using the same substrates and curing conditions as indicated with regard to Examples 1-7 except testing is performed after only 3 days curing at room temperature. Results are as indicated in Table 9. The results for Comparative Sample A are included for purposes of comparison.

**Table 9**

| **Designation** | **Lap Shear strength, MPa** | **% Cohesive Failure** |
|---|---|---|
| A* | 4.0 | 0 |
| 14 | 12.6 | 50 |
| 15 | 14.2 | 100 |
| 16 | 9.7 | 100 |
| 17 | 13.7 | 100 |
| 18 | 14.8 | 100 |
| 19 | 13.6 | 100 |
| 20 | 14.1 | 100 |

| | | |
|---|---|---|
| *Not an example of the invention. | | |

All of Examples 14-20 exhibit vastly improved lap shear strength and very high incidence of desirable cohesive failure.

The tensile properties of Comparative Adhesive A and Examples 3, 11, and 14-17 are measured according to DIN EN ISO 527-1. Tensile properties of Examples 16 and 17 are additionally measured after the accelerated curing protocol described before. Results are as indicated in Table 10.

**Table 10**

| Designation | Curing Protocol | Tensile Str., MPa | Elongation at Break, % | Elastic Modulus, MPa |
|---|---|---|---|---|
| A* | 7 day RT | 31 | 5 | 2050 |
| 3 | 7 Day RT | 19 | 12 | 1050 |
| 11 | 7 Day RT | 25 | 8 | 1500 |
| 14 | 7 Day RT | 19 | 12 | 1050 |
| 15 | 7 Day RT | 17 | 18 | 900 |
| 16 | 7 day RT | 13 | 17 | 464 |
| | Accelerated | 10 | 24 | 145 |
| 17 | 7 Day RT | 17 | 17 | 720 |
| | Accelerated | 11 | 18 | 323 |

| | | | | |
|---|---|---|---|---|
| *Not an example of the invention. | | | | |

Impact peel resistance is measured at 23°C for Comparative Sample A and Example 15, according to ISO 11343. The substrates are DC06A+ZE 75/75 and DX56D+Z100 galvanized steels, coated with Anticorit PL 3802-39S anticorrosive lubricant. The impact peel resistance for Comparative Sample A is zero, with 100% adhesive failure. The impact peel resistance for Example 15 is 12 N/mm, with 100% cohesive failure.

## Claims

1. A two-component epoxy adhesive comprising a resin side A and a curative side B, wherein:
a) the resin side A comprises
A-1) a liquid epoxy resin or a liquid mixture of non-rubber-modified epoxy resins, wherein if only a single non-rubber-modified epoxy resin is present, it is a liquid at 23°C and if two or more non-rubber-modified epoxy resins are present, the mixture thereof is a liquid at 23°C;
A-2) at least one of i) core-shell rubber particles, ii) an elastomeric toughener having capped isocyanate groups and iii) a rubber-modified epoxy resin, in an amount sufficient to provide resin side A with a rubber content of 5 to 50 weight percent, based on the total weight of the resin side A;
A-3) 8 to 20 weight percent, based on the total weight of the resin side A, of at least one plasticizer, wherein the plasticizer is an alkyl phthalate in which the alkyl groups each have 7 to 21 carbon atoms; and
A-4) 5 to 40 weight percent, based on the total weight of the resin side A, of at least one particulate filler; and
b) the curative side B comprises
B-1) at least one liquid polyether amine having at least two primary and/or secondary amino groups and a number average molecular weight of 200 to 6000;
B-2) at least one liquid amine-terminated polymer of butadiene having an amine hydrogen equivalent weight of 200 to 3000; and
B-3) at least one epoxy curing catalyst.

2. The two-component epoxy adhesive of any preceding claim wherein the curative side B further comprises B-4) at least one polyethyleneimine curing agent that has a number average molecular weight of at least 25,000 by gel permeation chromatography.

3. The two-component epoxy adhesive of any preceding claim wherein A-2 is present in an amount sufficient to provide resin side A with a rubber content of 10 to 30 weight percent, based on the total weight of the resin side A; and/or wherein A-2 is a mixture of the core-shell rubber particles and the elastomeric toughener having capped isocyanate groups.

4. The two-component epoxy adhesive of any preceding claim wherein the resin side A contains 3 to 15 weight percent of the core-shell rubber particles and 5 to 15 weight percent of the elastomeric toughener having capped isocyanate groups.

5. The two-component epoxy adhesive of any preceding claim wherein the curative side B further comprises B-5) up to 10 weight percent of a latent hardener.

6. The two-component epoxy adhesive of any preceding claim wherein the curative side B further comprises 1 to 4 weight percent, based on the weight of curative side B, of at least one of an acryl-modified silane compound and an acryl-modified phosphate compound.

7. The two-component epoxy adhesive of claim 6 wherein the acryl-modified silane compound is present and has the structure 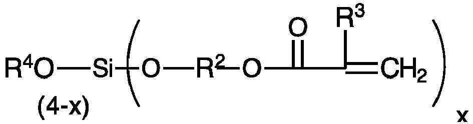
wherein R⁴ is alkyl, preferably methyl or ethyl; each R² is independently alkylene, R³ is hydrogen or alkyl, and x is 1 or 2;
and/or wherein the acryl-modified phosphate compound is present and has the structure: 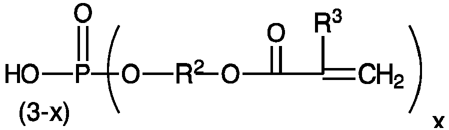
wherein R² is independently alkylene, R³ is hydrogen or alkyl, and x is 1 or 2.

8. The two-component epoxy adhesive of claim 7 wherein the acryl-modified silane compound is 2-methacryloyloxyethyl-trimethoxysilane, or wherein the acryl-modified phosphate compound is selected from bis (2-methacryloyloxyethyl) phosphate and 2-methacryloyloxyethyl phosphate.

9. The two-component epoxy adhesive of any preceding claim wherein the epoxy curing catalyst includes at least one tertiary amine compound.

10. The two-component epoxy adhesive of any preceding claim wherein component A-1) constitutes 30 to 70% of the total weight of resin side A.

11. A method for bonding two substrates, comprising combining the resin side A and the resin side B of the adhesive of any of the preceding claims to form a curable adhesive mixture, forming a layer of the curable adhesive mixture at a bondline between two substrates, and then curing adhesive layer at the bondline to form a cured adhesive bonded to the two substrates at the bondline.

12. The method of claim 11 wherein at least one of the substrates is an oily metal.

13. The method of claim 11 or 12 wherein the curing is performed at a temperature of 10 to 50°C.

14. The method of claim 11 or 12 wherein the curing is partially performed at a temperature of 10 to 50°C, followed by an elevated temperature cure.

15. The method of any of claims 11-14 wherein the cured adhesive exhibits an elongation of 4 to 25%, a tensile strength of at least 10 MPa, and an elastic modulus of at least 400 MPa, when measured according to DIN EN ISO 527-1.

## Patentansprüche

1. Zweikomponenten-Epoxidklebstoff, umfassend eine Harzseite A und eine Härtungsmittelseite Seite B, wobei:
a) die Harzseite A Folgendes umfasst:
A-1) ein flüssiges Epoxidharz oder eine flüssige Mischung von nicht kautschukmodifizierten Epoxidharzen, wobei, wenn nur ein einziges nicht kautschukmodifiziertes Epoxidharz vorhanden ist, dieses bei 23 °C eine Flüssigkeit ist, und wenn zwei oder mehr nicht kautschukmodifizierte Epoxidharze vorhanden sind, deren Mischung bei 23 °C eine Flüssigkeit ist;
A-2) mindestens eines von i) Kern-Schale-Kautschukpartikeln, ii) einem elastomeren Zähigkeitsvermittler mit verkappten Isocyanatgruppen und iii) einem kautschukmodifizierten Epoxidharz in einer Menge, die ausreicht, um die Harzseite A mit einem Kautschukgehalt von 5 bis 50 Gewichtsprozent, bezogen auf das Gesamtgewicht der Harzseite A, bereitzustellen;
A-3) 8 bis 20 Gewichtsprozent, bezogen auf das Gesamtgewicht der Harzseite A, von mindestens einem Weichmacher, wobei der Weichmacher ein Alkylphthalat ist, wobei die Alkylgruppen jeweils 7 bis 21 Kohlenstoffatome aufweisen; und
A-4) 5 bis 40 Gewichtsprozent, bezogen auf das Gesamtgewicht der Harzseite A, mindestens eines teilchenförmigen Füllstoffs; und
b) die Härtungsmittelseite B Folgendes umfasst:
B-1) mindestens ein flüssiges Polyetheramin, das mindestens zwei primäre und/oder sekundäre Aminogruppen und ein zahlenmittleres Molekulargewicht von 200 bis 6000 aufweist;
B-2) mindestens ein flüssiges Butadienpolymer mit Amin-Endgruppen, das ein Amin-Wasserstoffäquivalentgewicht von 200 bis 3000 aufweist; und
B-3) mindestens einen Epoxidhärtungskatalysator.

2. Zweikomponenten-Epoxidklebstoff nach einem der vorhergehenden Ansprüche, wobei die Härtungsmittelseite B ferner B-4) mindestens ein Polyethylenimin-Härtungsmittel umfasst, das ein zahlenmittleres Molekulargewicht von mindestens 25 000 aufweist, anhand von Gelpermeationschromatographie.

3. Zweikomponenten-Epoxidklebstoff nach einem der vorhergehenden Ansprüche, wobei A-2 in einer Menge vorhanden ist, die ausreicht, um der Harzseite A einen Kautschukgehalt von 10 bis 30 Gewichtsprozent, bezogen auf das Gesamtgewicht der Harzseite A, bereitzustellen; und/oder wobei A-2 ein Gemisch aus den Kern-Schale-Kautschukpartikeln und dem elastomeren Zähigkeitsvermittler ist, der verkappte Isocyanatgruppen aufweist.

4. Zweikomponenten-Epoxidklebstoff nach einem der vorhergehenden Ansprüche, wobei die Harzseite A 3 bis 15 Gewichtsprozent der Kern-Schale-Kautschukpartikel und 5 bis 15 Gewichtsprozent des elastomeren Zähigkeitsvermittlers mit verkappten Isocyanatgruppen aufweist.

5. Zweikomponenten-Epoxidklebstoff nach einem der vorhergehenden Ansprüche, wobei die Härtungsmittelseite B ferner B-5) bis zu 10 Gewichtsprozent eines latenten Härters umfasst.

6. Zweikomponenten-Epoxidklebstoff nach einem der vorhergehenden Ansprüche, wobei die Härtungsmittelseite B ferner 1 bis 4 Gewichtsprozent, bezogen auf das Gewicht der Härtungsmittelseite B, von mindestens einer acrylmodifizierten Silanverbindung und einer acrylmodifizierten Phosphatverbindung umfasst.

7. Zweikomponenten-Epoxidklebstoff nach Anspruch 6, wobei die acrylmodifizierte Silanverbindung vorhanden ist und folgende Struktur aufweist: 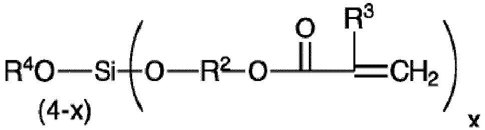
wobei R⁴ Alkyl, vorzugsweise Methyl oder Ethyl ist; jedes R² unabhängig Alkylen ist, R³ Wasserstoff oder Alkyl ist und x 1 oder 2 ist;
und/oder wobei die acrylmodifizierte Phosphatverbindung vorhanden ist und folgende Struktur aufweist: 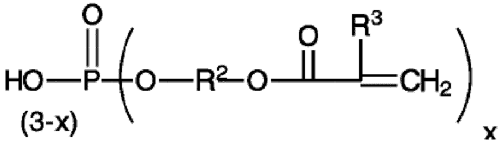
wobei R² unabhängig Alkylen ist, R³ Wasserstoff oder Alkyl ist und x 1 oder 2 ist.

8. Zweikomponenten-Epoxidklebstoff nach Anspruch 7, wobei es sich bei der acrylmodifizierten Silanverbindung um 2-Methacryloyloxyethyl-trimethoxysilan handelt, oder wobei die acrylmodifizierte Phosphatverbindung ausgewählt ist aus Bis(2-methacryloyloxyethyl)phosphat und 2-Methacryloxyethylphosphat.

9. Zweikomponenten-Epoxidklebstoff nach einem der vorhergehenden Ansprüche, wobei der Epoxidhärtungskatalysator mindestens eine tertiäre Aminverbindung einschließt.

10. Zweikomponenten-Epoxidklebstoff nach einem der vorhergehenden Ansprüche, wobei die Komponente A-1) 30 bis 70 % des Gesamtgewichts der Harzseite A ausmacht.

11. Verfahren zum Verbinden zweier Substrate, Folgendes umfassend: Kombinieren der Harzseite A und der Harzseite B des Klebstoffs nach einem der vorhergehenden Ansprüche, um eine härtbare Klebstoffmischung zu bilden, Bilden einer Schicht der härtbaren Klebstoffmischung an einer Verbindungslinie zwischen zwei Substraten und anschließendes Härten der Klebstoffschicht an der Verbindungslinie, um einen gehärteten Klebstoff zu bilden, der mit den beiden Substraten an der Verbindungslinie verbunden ist.

12. Verfahren nach Anspruch 11, wobei mindestens eines der Substrate ein öliges Metall ist.

13. Verfahren nach Anspruch 11 oder 12, wobei die Aushärtung bei einer Temperatur von 10 bis 50 °C durchgeführt wird.

14. Verfahren nach Anspruch 11 oder 12, wobei die Aushärtung teilweise bei einer Temperatur von 10 bis 50 °C durchgeführt wird, gefolgt von einer Aushärtung bei erhöhter Temperatur.

15. Verfahren nach einem der Ansprüche 11 bis 14, wobei der ausgehärtete Klebstoff eine Dehnung von 4 bis 25 %, eine Zugfestigkeit von mindestens 10 MPa und ein Elastizitätsmodul von mindestens 400 MPa aufweist, gemessen nach DIN EN ISO 527-1

## Revendications

1. Adhésif époxy à deux composants comprenant une partie résine A et une partie durcisseur B, dans lequel :
a) la partie résine A comprend
A-1) une résine époxy liquide ou un mélange liquide de résines époxy non modifiées par un caoutchouc, dans lequel si uniquement une seule résine époxy non modifiée par un caoutchouc est présente, elle est un liquide à 23 °C et si deux résines époxy non modifiées par un caoutchouc ou plus sont présentes, le mélange de celles-ci est un liquide à 23 °C,
A-2) au moins un parmi les suivants i) des particules de caoutchouc de type noyau-coquille, ii) un agent de ténacité élastomère présentant des groupes isocyanate coiffés et iii) une résine époxy modifiée par un caoutchouc, en une quantité suffisante pour donner une teneur en caoutchouc à la partie A de résine de 5 à 50 pour cent en poids, rapporté au poids total de la partie résine A,
A-3) 8 à 20 pour cent en poids, rapporté au poids total de la partie résine A, d'au moins un plastifiant, dans lequel le plastifiant est un phtalate d'alkyle dans lequel les groupes alkyles comportent chacun 7 à 21 atomes de carbone, et
A-4) 5 à 40 pour cent en poids, rapporté au poids total de la partie résine A, d'au moins une charge particulaire, et
b) la partie durcisseur B comprend
B-1) au moins un polyéther amine liquide comportant au moins deux groupes amino primaires et/ou secondaires et ayant un poids moléculaire moyen en nombre de 200 à 6000,
B-2) au moins un polymère de butadiène liquide à terminaison amine ayant un poids équivalent en hydrogène d'amine de 200 à 3000, et
B-3) au moins un catalyseur de durcissement d'époxy.

2. Adhésif époxy à deux composants selon la revendication précédente, dans lequel la partie durcisseur B comprend en outre B-4) au moins un agent de durcissement de polyéthylèneimine ayant un poids moléculaire moyen en nombre d'au moins 25 000 par chromatographie par perméation de gel.

3. Adhésif époxy à deux composants selon l'une quelconque des revendications précédentes, dans lequel A-2 est présent en une quantité suffisante pour donner à la partie résine Aune teneur en caoutchouc de 10 à 30 pour cent en poids, rapporté au poids total de la partie résine A, et/ou dans lequel A-2 est un mélange des particules de caoutchouc de type noyau-coquille et de l'agent de ténacité élastomère comportant des groupes isocyanate coiffés.

4. Adhésif époxy à deux composants selon l'une quelconque des revendications précédentes, dans lequel la partie de résine A contient 3 à 15 % en poids de particules de caoutchouc de type noyau-coquille et de 5 à 15 % en poids d'agent de ténacité élastomère comportant des groupes isocyanate coiffés.

5. Adhésif époxy à deux composants selon l'une quelconque des revendications précédentes, dans lequel la partie durcisseur B comprend en outre B-5) jusqu'à 10 pour cent en poids d'un durcisseur latent.

6. Adhésif époxy à deux composants selon l'une quelconque des revendications précédentes, dans lequel la partie durcisseur B comprend en outre 1 à 4 pour cent en poids, rapporté au poids de la partie durcisseur B, d'au moins l'un parmi un composé silane modifié par un acryle et un composé phosphate modifié par un acryle.

7. Adhésif époxy à deux composants selon la revendication 6, dans lequel le composé silane modifié par un acryle est présent et présente la structure suivante : 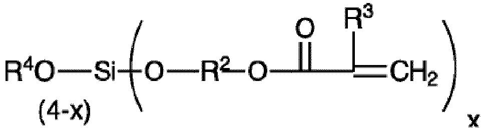
où R⁴ est un alkyle, de préférence méthyl ou éthyl, chaque R² est indépendamment un alkylène, R³ est hydrogène ou alkyle, et x est 1 ou 2,
et/ou dans lequel le composé phosphate modifié par un acryle est présent et présente la structure suivante : 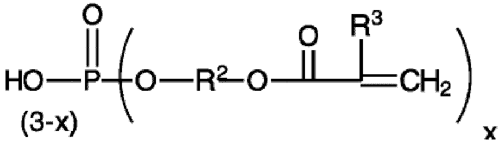
où R² est indépendamment un alkylène, R³ est hydrogène ou alkyle, et x est 1 ou 2.

8. Adhésif époxy à deux composants selon la revendication 7, dans lequel le composé silane modifié par un acryle est du 2-méthacryloyloxyéthyl-triméthoxysilane, ou dans lequel le composé phosphate modifié par un acryle est choisi parmi du phosphate de bis(2-méthacryloyloxyéthyl) et du phosphate de 2-méthacryloyloxyéthyl.

9. Adhésif époxy à deux composants selon l'une quelconque des revendications précédentes, dans lequel le catalyseur de durcissement d'époxy inclut au moins un composé amine tertiaire.

10. Adhésif époxy à deux composants selon l'une quelconque des revendications précédentes, dans lequel le composant A-1) constitue 30 à 70 % du poids total de la partie de résine A.

11. Procédé pour coller deux substrats, comprenant l'association de la partie de résine A et de la partie de résine B de l'adhésif selon l'une quelconque des revendications précédentes pour former un mélange d'adhésif durcissable, la formation d'une couche du mélange adhésif durcissable sur une ligne de collage entre deux substrats, et ensuite le durcissement de la couche d'adhésif sur la ligne de collage pour former un adhésif durci collé aux deux substrats sur la ligne de collage.

12. Procédé selon la revendication 11, dans lequel au moins l'un des substrats est un métal huileux.

13. Procédé selon la revendication 11 ou 12, dans lequel le durcissement est réalisé à une température de 10 à 50 °C.

14. Procédé selon la revendication 11 ou 12, dans lequel le durcissement est réalisé en partie à une température de 10 à 50 °C, suivi d'un durcissement à température élevée.

15. Procédé selon l'une quelconque des revendications 11 à 14, dans lequel l'adhésif durci présente un allongement de 4 à 25 %, une résistance à la traction d'au moins 10 MPa, et un module d'élasticité d'au moins 400 MPa, tel que mesuré selon la norme DIN EN ISO 527-1.
